# EUROPEAN PATENT APPLICATION

(11) **EP 2 262 048 A1**
(43) Date of publication of application: **15.12.2010**
(21) Application number: 09725761.2
(22) Date of filing: 17.03.2009
(51) Int. Cl.: H01M 10/50, B60K 1/04, B60K 11/04, B60K 11/06, H01M 2/10

(54) **BATTERY DEVICE AND BATTERY UNIT**

(30) Priority: 24.03.2008 JP 2008076002; 24.03.2008 JP 2008075326; 03.03.2009 JP 2009048805
(71) Applicant: Sanyo Electric Co., Ltd., Osaka 570-8677 (JP)
(72) Inventor: KUROSAWA, Yoshiaki, Moriguchi-shi Osaka 570-8677 (JP)
(74) Representative: Glawe, Delfs, Moll
(86) International application number: PCT/JP2009/001172
(87) International publication number: WO 2009/119037

(57) **Abstract**

Occurrence of noise and invasion of grit or dust are prevented and occurrence of condensed water is suppressed.

A battery device having a battery which is mounted in a battery case to accumulate power to be demanded and supplied to a motor for driving a vehicle is **characterized in that** the battery case is designed in a hermetically-sealed structure, a heat exchanger for cooling ambient atmosphere in the battery case and an air blower for blowing cold air of the heat exchanger to the battery are provided in the battery case, and inert gas or dried air is hermetically filled in the battery case under a state that the battery case is hermetically sealed.

## Description

### Technical Field

The present invention relates to a battery device and a battery unit that are suitably mounted in a hybrid vehicle or an electrical vehicle.

### Background Art

An electric-motor driven high-voltage battery device is mounted in a hybrid vehicle or an electrical vehicle which uses an electric motor as a driving source.
A technique of air-cooling a battery device with an air blowing fan is known as a technique of cooling the battery device, and there are known an apparatus in which a battery device is air-cooled by an air blowing fan disposed in a duct through which a rear portion of a rear seat of a vehicle interior and the outside of the vehicle intercommunicate with each other (for example, see Patent Document 1), or an apparatus in which an air suction duct and an air exhaust port are provided to a battery device, outside air is taken from the air suction duct by an air blowing fan mounted in the battery device to cool the inside of the battery device, and exhausted from the air exhaust port (for example, see Patent Document 2), for example.
Furthermore, there is also known a technique in which a heat transfer plate is installed in a battery device to be integrally joined to a battery pack and cooling water is circulated in the heat transfer plate to cool the battery pack (for example, see Patent Document 3).
Patent Document 1: JP-A-11-195437
Patent Document 2: JP-A-2005-183163
Patent Document 3: JP-A-8-148187

### Disclosure of the Invention

### Problem to be solved by the Invention

However, when the battery is air-cooled by the air blowing fan, there occurs problems such as occurrence of noise due to the operation of the air blowing fan and invasion of grit, dust or the like into the battery device due to air blow. In addition, cooling is performed by air having relatively small heat capacity, and thus there occurs a problem that it is difficult to sufficiently cool the battery device when the outside air temperature is high.

The technique of cooling the battery pack by the heat transfer has such a problem that condensed water occurs around or inside the battery device when the battery pack is cooled and it causes insulation failure or corrosion of electrical parts, which causes quality deterioration.

The present invention has been implemented in view of the foregoing situation, and has an object to provide a battery device that can prevent occurrence of noise and invasion of grit and dust and also suppress occurrence of condensed water.
Furthermore, the present invention has an object to provide a battery unit that can cool a battery device without using an air conditioner of a vehicle.

### Means of solving the Problem

In order to attain the above object, according to the present invention, a battery device having a battery which is mounted in a battery case to accumulate power to be demanded and supplied to a motor for driving a vehicle is **characterized in that** the battery case is designed in a hermetically-sealed structure, a heat exchanger for cooling ambient atmosphere in the battery case and an air blower for blowing cold air of the heat exchanger to the battery are provided in the battery case, and inert gas or dried air is hermetically filled in the battery case under a state that the battery case is hermetically sealed.

Furthermore, the present invention is **characterized in that** the battery has plural rectangular element batteries and the respective element batteries are configured in close contact with one another so that an insulating sheet is interposed between the respective element batteries in the above invention.

The present invention is **characterized in that** the battery has plural rectangular element batteries and the respective element batteries are arranged so that a gap for passing the cold air is provided.

Furthermore, in order to attain the above object, according to the present invention, a battery device having a battery which is mounted in a battery case to accumulate power to be demanded and supplied to a motor for driving a vehicle is **characterized in that** the battery case is designed in a hermetically-sealed structure, a plate type heat exchanger is provided in the battery case to be in close contact with the battery, and inert gas or dried air is hermetically filled in the battery case under a state that the battery case is hermetically sealed.

In order to attain the above object, a battery device having a battery which is mounted in a battery case to accumulate power to be demanded and supplied to a motor for driving a vehicle is **characterized in that** the battery case is designed in a hermetically-sealed structure, the battery is disposed in close contact with the internal side of any surface of a side surface, a bottom surface and a top surface of the battery case, a plate type heat exchanger is disposed so as to be brought into contact with the battery-contacted surface from the outside, and inert gas or dried air is hermetically filled in the battery case under a state that the battery case is hermetically sealed.

Furthermore, the present invention is **characterized in that** a stress breaker for absorbing an internal pressure variation caused by internal temperature variation is provided in the battery case in the above invention.

The present invention is **characterized in that** the battery in the battery case can be warmed by the heat exchanger in the above invention.

In order to attain the above object, according to the present invention, there is provided a battery unit having a battery device for supplying power to amotor for driving a vehicle, and a cooling and warming device comprising a compressor to be driven with electric power supplied from the battery device, a first heat exchanger that heat-exchanges with the outside air, a pressure-reducing device and a second heat exchanger for cooling or warming the battery device, the battery device and the cooling and warming device being integrated with each other.

Furthermore, the present invention is **characterized in that** the first heat exchanger is provided to be mountable in a passage for exhausting air in a vehicle interior of a vehicle to the outside of the vehicle interior in the above invention.

Still furthermore, the present invention is characterized by further comprising control means for driving the cooling and warming device with power supplied from the battery device when the temperature of the battery device is lower than the lowest temperature required to keep the quality of the battery device or exceeds the maximum temperature.

### Effect of the Invention

According to the battery device of the present invention, the battery case in which the battery is mounted is designed in the hermetically-sealed structure, and thus invasion of grit or dust into the battery case can be prevented.
Furthermore, the battery case has the hermetically-sealed structure, and thus even when the air blower is disposed in the battery case, leakage of sound to the outside is reduced and thus occurrence of noise can be prevented.
In addition, under the state that the battery case is hermetically sealed, inert gas or dried air is hermetically filled in the battery case and thus occurrence of condensed water when the battery in the battery case is cooled by the heat exchanger can be prevented.

Furthermore, according to the battery unit of the present invention, the battery device for supplying power to the vehicle driving motor and the cooling and warming device having the second heat exchanger for cooling or warming the battery device are provided integrally with each other to construct the battery unit. Therefore, the cooling or warming of the battery device can be performed without using any air conditioner for a vehicle. Furthermore, the compressor of the cooling and warming device is driven with power supplied from the battery device, so that the cooling and warming device can be driven independently of a power supply system at the vehicle side.

### Brief Description of the Drawings

[Fig. 1] Fig. 1 is a diagram showing the construction of a four-wheeled electrical vehicle in which a battery unit according to a first embodiment of the present invention is mounted.
[Fig. 2] Fig. 2 is a perspective view showing the construction of the battery unit.
[Fig. 3] Fig. 3 is a schematic diagram showing the construction of the battery unit.
[Fig. 4] Fig. 4 is a diagram showing the construction of a battery device.
[Fig. 5] Fig. 5 is an exploded perspective view showing the battery device.
[Fig. 6] Fig. 6 is a perspective view showing the constructions of a battery pack, a heat exchanger, etc.
[Fig. 7] Fig. 7 is a diagram showing the construction of the battery pack.
[Fig. 8] Fig. 8 is a perspective view showing the construction of the heat exchanger.
[Fig. 9] Fig. 9 is a schematic diagram showing a modification of the battery device according to a second embodiment of the present invention.
[Fig. 10] Fig. 10 is a perspective view showing the construction of a battery pack, a heat exchanger, etc.
[Fig. 11] Fig. 11 is a schematic diagram showing a battery device according to a third embodiment of the present invention.
[Fig. 12] Fig. 12 is a diagram showing a modification of a battery pack of each embodiment.
[Fig. 13] Fig. 13 is a schematic diagram showing the construction of a battery unit according to a fourth embodiment of the present invention.
[Fig. 14] Fig. 14 is an exploded perspective view showing a battery device.
[Fig. 15] is a perspective view showing the constructions of a battery pack and a cooling and warming plate.
[Fig. 16] Fig. 16 is a flowchart of battery protecting operation processing.
[Fig. 17] Fig. 17 is a flowchart showing battery cooling/warming operation processing.
[Fig. 18] Fig. 18 is a schematic diagram showing a modification of a battery unit of a fourth embodiment.
[Fig. 19] Fig. 19 is a schematic diagram showing another modification of the battery unit according to the fourth embodiment.

### Description of Reference Numeral

1 electrical vehicle
4 motor for driving vehicle
10, 510, 600, 700 battery unit
11, 11A, 11B, 511, 511A, 511B high electric cable
12, 112, 212, 512 battery device
13 refrigerating device
20, 520 element battery
21, 521 battery pack
23, 523 controller
24 battery case
27 insulating sheet
29 gap
30, 130, 230, 532 heat exchanger
31 air blowing fan
40, 540 container body
42, 542 lid plate
48, 548 exhaust safety valve
49 stress breaker
50, 550 compressor
52, 552 four-way valve
54, 554 heat exchanger at refrigerating apparatus side (first heat exchanger)
55, 555 air blowing fan
56, 556 expansion valve (pressure reducing device)
65 duct
82 horizontal air leading path
84 vertical air leading path
90 cooling plate fixing plate
70, 570 branching unit
72, 572 inverter
513 cooling and warming device
522 cooling and warming plate (second heat exchanger)
524 hermetically-sealed container

### Best Mode for carrying out the Invention

Embodiments of the present invention will be described hereunder with reference to the accompanying drawings.

### <First Embodiment>

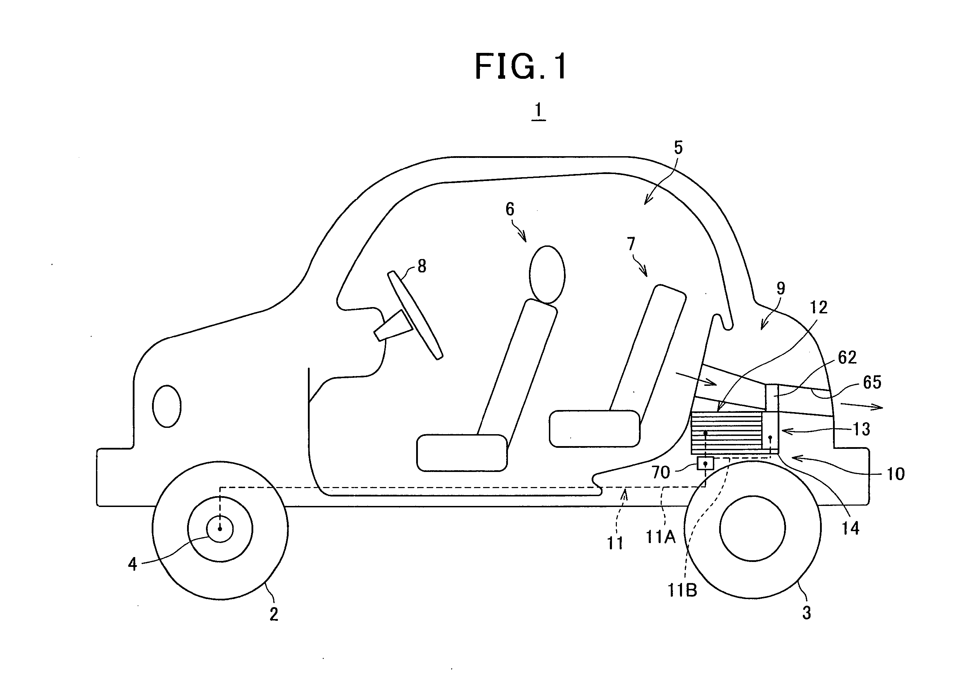

Fig. 1 is a diagram showing the construction of a four-wheeled electrical vehicle 1 in which a battery unit 10 according to an embodiment is mounted. The electrical vehicle 1 has front wheels 2 and rear wheels 3, a vehicle driving motor 4 which is provided to each front wheel 2 or each rear wheel 4 or each of the front and rear wheels (only the front wheels 2 in the example of Fig. 1). The vehicle driving motor 4 constitutes a driving source for moving the vehicle. A driving seat 6 and a rear seat 7 are disposed at the front and rear sides in a vehicle interior 5 of the electrical vehicle 1, and a steering wheel 8, a meter panel (not shown), etc. are disposed at the front side of the driving seat 6.

A trunk 9 is provided at the rear side of the rear seat 7, and a high-voltage battery unit 10 is disposed in the trunk 9. The battery unit 10 demands and supplies power to the vehicle driving motor 4 to drive the motor 4. The power feed from the battery unit 10 to the vehicle driving motor 4 is performed through a high electrical cable 11 as a power supply line drawn out from the battery unit 10.

When the battery of the batter unit 10 (a battery pack 21 described later) is used only to drive the electrical vehicle 1, the battery is discharged in addition to spontaneous discharge. In order to compensate for this discharge, under a control switching operation, the vehicle driving motor 4 can be used as an electric generator when the electrical vehicle 1 is decelerated and a regenerating brake which actively uses kinetic energy to supplementarily charge the battery can be used. Therefore, the battery unit 10 of this embodiment is configured to bi-directionally demand and supply power to the vehicle driving motor 4.

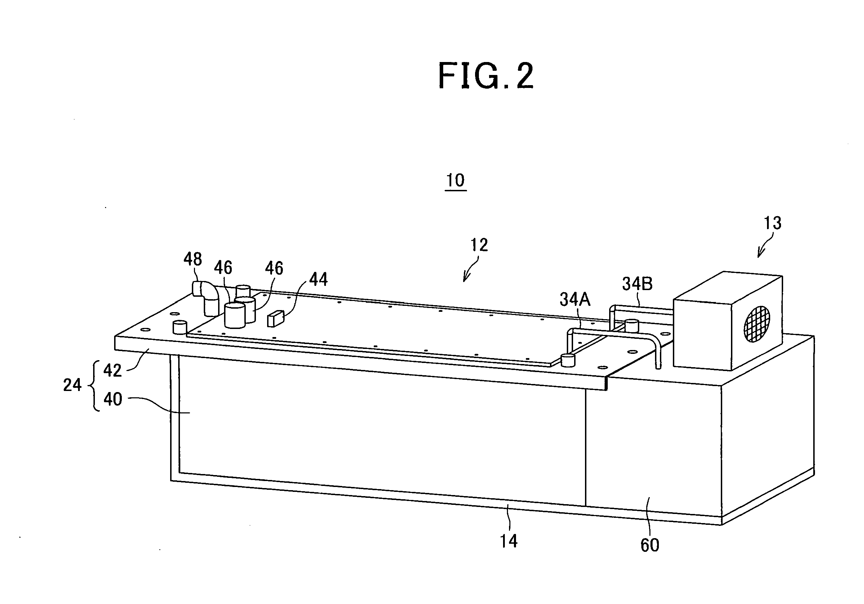

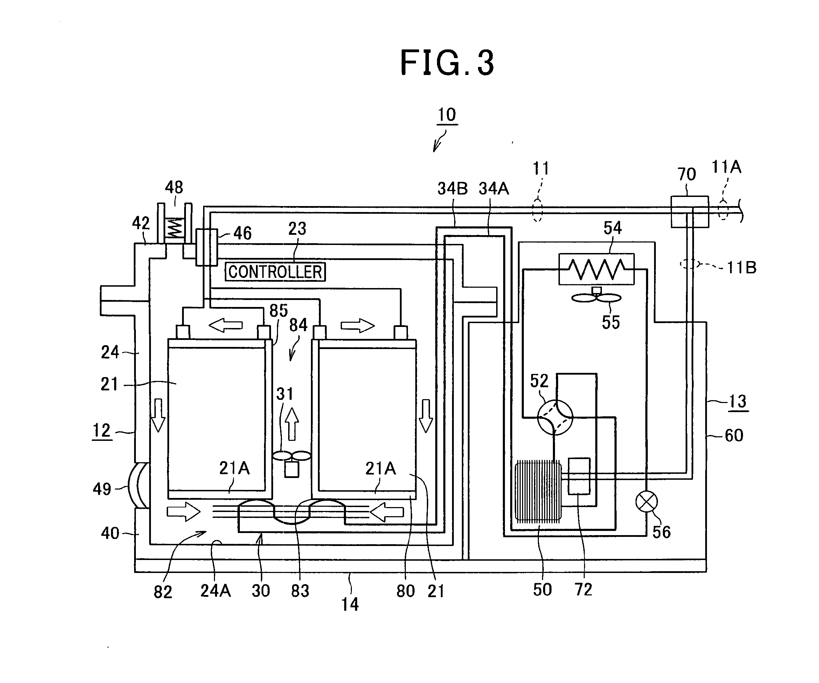

Fig. 2 is a perspective view showing the construction of the battery unit 10, and Fig. 3 is a schematic diagram showing the construction of the battery unit 10.
As shown in Figs. 2 and 3, the battery unit 10 has a battery device 12 for accumulating power to be demanded and supplied to the vehicle driving motor 4, and a refrigerating apparatus 13 for cooling or warming the battery device 12. The battery device 12 and the refrigerating apparatus 13 are mounted and fixed onto a base board 14 to be assembled with each other.

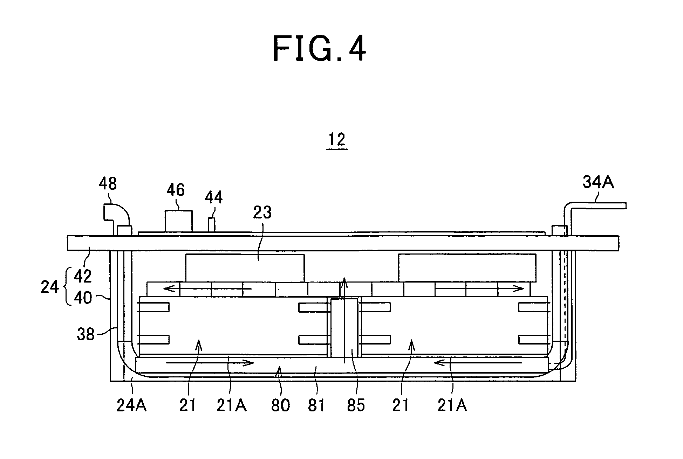

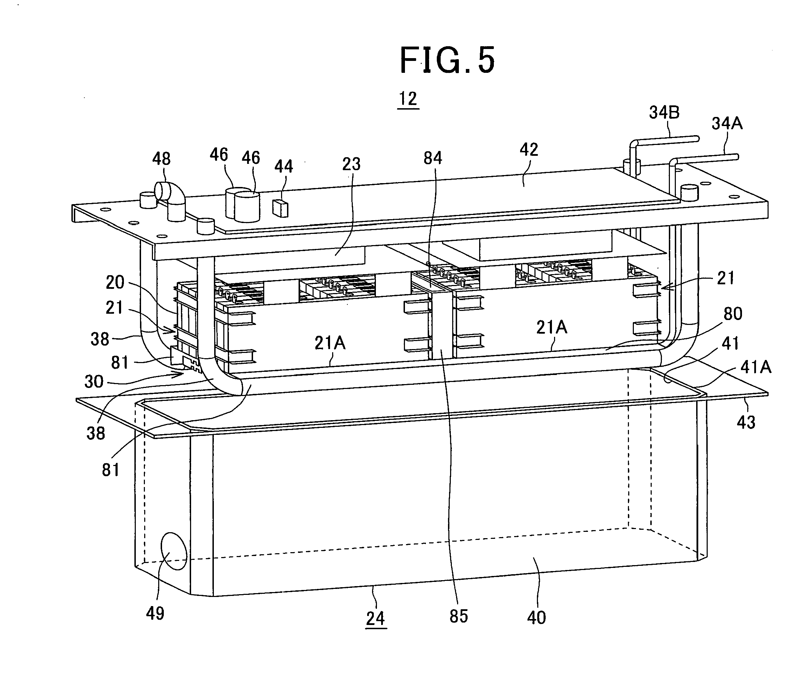

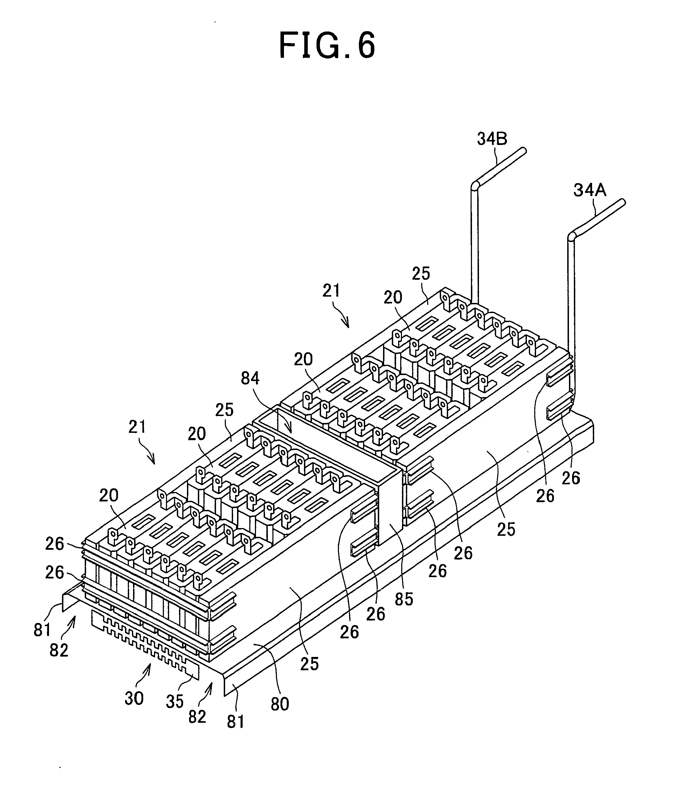

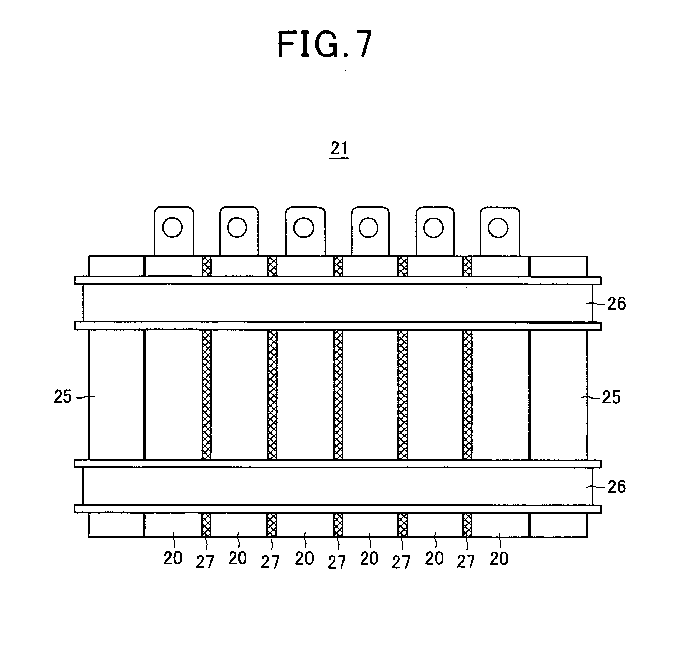

Fig. 4 is a diagram showing the construction of the battery device 12, and Fig. 5 is an exploded perspective view showing the battery device 12.
As shown in Figs. 4 and 5, the battery device 12 has a battery case 24 in which a battery pack 21 is mounted, and a heat exchanger 30, an air blowing fan 31 (Fig. 3) and a controller 23 are mounted in the battery case 24.
As shown in Figs. 6 and 7, the battery pack 21 is configured by mutually electrically connecting a plurality of element batteries (cells) 20 as a set. A nonaqueous electrolytic secondary battery containing an electric generating element in which a positive electrode and a negative electrode are wound through a separator is mounted in a rectangular flat-plate type case of aluminum or aluminum alloy, thereby forming the element battery 20. Lithium ion secondary battery or the like is suitably used as the nonaqueous electrolytic secondary battery.

The plural rectangular element batteries 20 are arranged in parallel so as to be laminated, sandwiched by a pair of pinching sheets 25 and bound by a binding cramp 26, thereby constructing a substantially rectangular parallelepiped battery pack 21. As shown in Fig. 7, the battery pack 21 is configured by interposing an insulating sheet between the element batteries 20 so as to so that the element batteries 20 are brought into close contact with one another with no gap while keeping insulation between the respective element batteries 20.

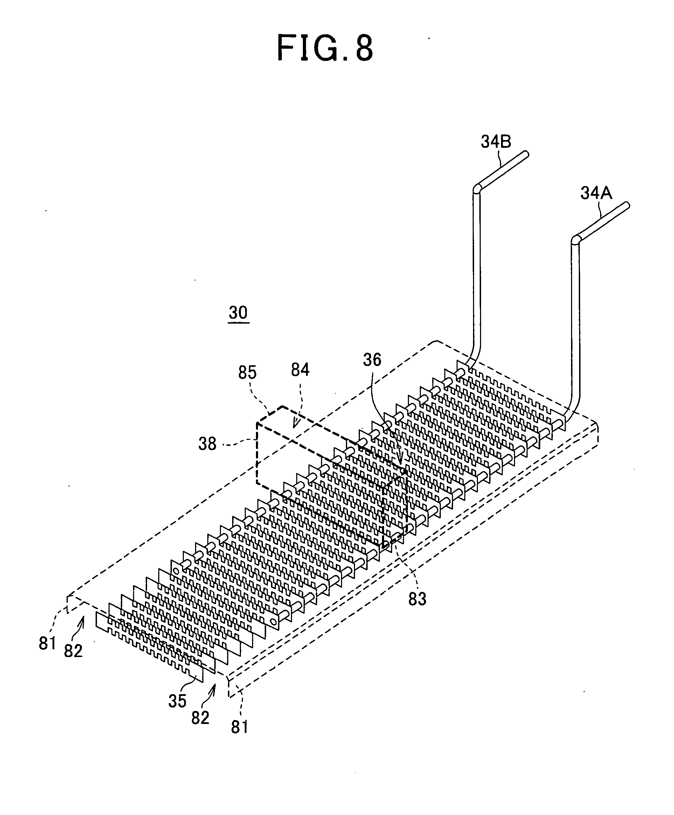

A plurality of battery packs 21 as described above are arranged side by side in the battery case 24, and the heat exchanger 30 is disposed at the lower side of these battery packs 21.
The heat exchanger 30 heat-exchanges with the ambient atmosphere in the battery case 24 to cool or warm the ambient atmosphere. As shown in Fig. 8, the heat exchanger 30 is configured as a so-called fin tube type which has one refrigerant pipe obtained by connecting a liquid pipe 34A and a gas pipe 34B extending substantially in parallel through a meandering tube (not shown), and plural flat-shaped heat transfer fins 35 provided so as to bridge the liquid pipe 34A and the gas pipe 34B. A heat-exchanging unit d36 which spreads in a planar shape by the arrangement of the plural heat transfer fins 35. As shown in Figs. 3 and 4, the heat exchanger 30 is disposed at the bottom surface 24A side of the battery case 24 in such an attitude that the heat-exchanging unit 36 is disposed along the bottom surface 24A.

As shown in Fig. 5, the battery case 24 has a box-type container body 40 opened at the upper surface thereof, and a lid plate 42 which closes the container body 40 to hermetically seal the container body 40. A folding piece 43 is provided over the whole periphery of the edge portion 41A of an opening 41 of the container body 40. When the opening 41 is hermetically closed by the lid plate 42, the lid plate 42 comes into close contact with the folding piece 43 through a seal member (not shown), thereby enhancing the hermetical sealing performance. Furthermore, the battery packs 21 and the heat exchanger 30 are suspended on the lid plate 42. Specifically, the heat exchanger 30 on which the battery packs 21 are mounted is secured to the valley portions of two frame pipes 38 which are bent to be substantially U-shaped so that the heat exchanger 30 is pinched by the pair of frame pipes 38. Both the ends of the two frame pipes 38 are made to penetrate to the back side of the lid plate 42 and fixed, so that the battery packs 21 and the heat exchanger 30 are suspended on the lid plate 42. With this construction, the close contact between the lid plate 42 and the folding piece 43 is enhanced by the loads of the battery packs 21 and the heat exchanger 30, and high hermetical sealing can be implemented.

The controller 23 is configured as a thin box type, and it is disposed in the gap between the lid plate 42 and the battery packs. The controller 23 is driven with power supplied from the battery packs 21 or a battery which is separately provided, and it is configured to be independently operable as a control system at the vehicle side to control the charging of the battery device 12 and the operation of the refrigerating apparatus 13. The controller 23 may be provided separately from a controller for controlling the charging of the battery device 12.

The liquid pipe 34A and the gas pipe 34B of the heat exchanger 30 is made to penetrate through the lid plate 42 and drawn from the back surface side of the lid plate 42 to the outside, and the lid plate 42 is also provided with a plug for a vehicle communication line, a pair of high voltage line connection plugs 46, and an exhaust safety valve 48.
The vehicle communication line plug 44 is a connection plug for connecting a communication line through which a vehicle-side control system for performing control related to running, etc. of the vehicle and a controller 23 are connected, and the pair of high voltage line connection plugs 46 are plugs for connecting two power feeding lines provided to the high electrical cable 11 to the battery packs 21.

When inner pressure of the battery case 24 reaches a predetermined inner pressure, the tap of the exhausting safety valve 48 is pushed out by the inner pressure and thus the valve is opened, so that gas in the battery case 24 is allowed to be discharged. More specifically, with respect to a secondary battery, for example, a lithium ion secondary battery, particularly when it is excessively charged or short-circuiting occurs inside the battery under a charging state, heat is generated or gas occurs due to abnormal reaction, so that the inner pressure may rapidly increase. In such a case, in order to prevent increase of the inner pressure of the battery case 24 and thus burst of the battery case 24 in advance, the exhaust safety valve 48 is opened and the gas inside the battery case 24 is discharged to the outside.

Furthermore, as shown in Figs. 3 and 5, a stress breaker 49 is provided to the side surface of the container body 40. The stress breaker 49 is a structure for absorbing variation of the internal pressure entailing internal temperature variation. For example, it is configured to have an elastic member or elastic structure having elasticity and air-tightness, and it protrudes to the outside or retracts in accordance with the increasing or decreasing variation of the internal pressure to increase/reduce the volume of the battery case 24, thereby absorbing the variation of the internal pressure.

The refrigerating apparatus shown in Figs. 2 and 3 is an apparatus for cooling or warming the battery device 12, and it has a case body 60, a compressor 50, a four-way valve 52, a refrigerating apparatus side heat exchanger 54 for heat-exchanging with the outside air, an air blowing fan 55 for blowing the outside air to the refrigerating apparatus side heat exchanger 54, and an expansion valve 56 as a pressure-reducing device. Furthermore, the heat exchanger 30 disposed in the battery device 12 is connected to the refrigerating apparatus 13, thereby constructing a refrigerating circuit (refrigeration cycle).

The refrigerating apparatus 13 is drive with power supplied from the battery device 12. That is, the high electric cable 11 drawn out from the battery device 12 is branched into two systems of a high electric cable 11A for driving the vehicle and a high electric cable 11B for driving the refrigerating apparatus 13 by a branch unit 70, and the high electric cable 11B is connected to the refrigerating apparatus 13. The refrigerating apparatus 13 has an inverter 72 for converting DC power of high voltage supplied from the battery device 12 to AC power of predetermined power, and the compressor 50 is driven by the AC power of the inverter 72. A compact compressor having so high capacity as to cool the battery device 12 is used as the compressor 50, and the refrigerating apparatus 13 is configured in a compact size.

The refrigerating apparatus side heat exchanger 54 and the air blowing fan 55 are disposed at some positions in a duct 65 forming an air exhaust path which passes from the rear side of the rear seat 7 of the vehicle interior 5 just below or aside the trunk 9 and intercommunicates with the outside of the vehicle to exhaust air in the vehicle interior 5 to the outside. The air blowing fan 55 is disposed so that air flow directing from the vehicle interior 5 side to the outside of the vehicle portion is formed in the duct 65, and the air in the vehicle interior is heat-exchanged with the refrigerating apparatus side heat exchanger 54, and then discharged to the outside of the vehicle. Accordingly, the air which is heated or cooled through the heat-exchange with the refrigerating apparatus side heat exchanger 54 is prevented from being blown into the vehicle interior 5. Furthermore, the refrigerating apparatus side heat exchanger 54 which heat-exchanges with the outside air is provided on the path of the duct 65, and thus when the battery device 12 is cooled, heat is laved from cooled air in the vehicle interior 5 and thus energy-saving operation can be performed.

The control of the operation of the thus-constructed refrigerating apparatus 13 is performed by the controller 23 of the battery device 12. That is, the controller 23 detects the temperature of the battery packs 21, and switches the four-way valve 52 in accordance with the cooling and warming of the battery device 12 on the basis of the detection temperature 21, whereby the heat exchanger 30 mounted in the battery case 24 of the battery device 12 is made to function as an evaporator or condenser to perform cooling or warming. At this time, the refrigerating apparatus 13 is operated with power supplied form the battery device 12, and thus the operation of the refrigerating apparatus 13 can be controlled independently of the power supply system at the vehicle side. Accordingly, even when the power source at the vehicle side is turned off, the refrigerating apparatus 13 is driven to introduce refrigerant into the heat exchanger 30 mounted in the battery device 12, whereby the battery device 12 can be cooled or warmed.

In this embodiment, the refrigerating apparatus 13 is provided integrally with the battery device 12. However, this embodiment is not limited to this style, and the refrigerating apparatus 13 and the battery device 12 may be provided separately from each other. Furthermore, refrigerant of an existing air conditioner (car air conditioner) provided in the vehicle may be introduced into the heat exchanger 30 of the battery device 12.

Here, when refrigerant is introduced into the heat exchanger 30 mounted in the battery case 24 of the battery device 12 to cool the ambient atmosphere in the battery case 24, condensed water may occur in the battery case 24 and cause insulation failure or corrosion of electrical parts, resulting in deterioration of quality.

Therefore, after the battery case 24 is hermetically sealed, inert gas such as nitrogen gas (N₂), helium gas (He), argon gas (Ar), carbon dioxide gas (CO₂) or the like or dried air (it is preferable that dew-point temperature is not more than -30°C) is hermetically filled in the battery case 24 so that air containing moisture can be exhausted (replaced by inert gas or dried air) from the inside of the battery case 24. Therefore, occurrence of condensed water is prevented under cooling operation.

In order to fill the inert gas or the dried air into the battery case 24, the container body 40 is closed to be hermetically sealed by the lid plate 42, and then a proper amount of inert gas or dried air is filled from a steel bottle filled with inert gas or dried air through a filling port with a rubber valve (not shown) provided to the side surface of the battery case 24 (container body 40).

As another method of filling inert gas or dried air into the battery case 24, the inside of a chamber which is configured at such a size that the battery case 24 (the container body 40 and the lid plate 42) can be mounted is kept under an inert-gas or dried-air atmosphere, and a fabrication work of closing the container body 40 by the lid plate 42 in the chamber concerned to hermetically seal the container body 40 may be performed.

The ambient atmosphere which is cooled or warmed by introducing refrigerant into the heat exchanger 30 is blown to the battery packs 21 by the air blowing fan 31.

Describing in detail, a horizontal air leading path forming plate 80 having high thermal conductivity of aluminum or aluminum alloy is disposed at the upper side of the heat exchanger 30 as shown in Figs. 6 and 8, for example. The horizontal air leading path forming plate 80 is a plate-shaped member covering the whole surface of the heat-exchanging unit 36 of the heat exchanger 30, and both edge portions thereof which sandwich the heat-exchanging unit 36 are folded substantially vertically to construct guide pieces 81. A horizontal air leading path 82 extending in the horizontal direction in the battery case 24 is formed along the heat-exchanging unit 36 between the guide piece 81 and the heat-exchanging unit 36.

As shown in Fig. 8, a substantially rectangular opening 83 is formed within the plane of the horizontal air leading path forming plate 80, and a vertical air leading path forming duct 85 which extends vertically in the battery case 24 to form a vertical air leading path 84 is connected to the opening 83. As shown in Fig. 3, the air blowing fan 31 is disposed in the vertical air leading path forming duct 85. The air blowing fan 31 is disposed in such an attitude as to blow air upwardly. Accordingly, as shown in Fig. 3, cold air or warm air generated by the heat-exchanging unit 30 is passed from the horizontal air leading path 82 through the vertical air leading path 84 and then blown out to the lid plate 42 side of the battery case 24.

As described above, the battery pack 21 is fabricated by arranging plural rectangular flat-shaped element batteries 20 and thus has a substantially rectangular parallelepiped shape as a whole. The battery packs 21 as described above are arranged on the horizontal air leading path forming plate 80 so as to sandwich the vertical air leading path forming duct 85 under the state that the bottom surfaces 21A thereof are brought into close contact with the horizontal air leading path forming plate 80 as shown in Figs. 3 and 6.

Furthermore, a predetermined gap is formed between each battery pack 21 and each inner surface of the battery case 24. In connection with the operation of the air blowing fan 31, cold air or warm air blown out from the vertical air leading path forming duct 85 is passed through the gap between the battery pack 21 and the lid plate 42 and the gap between the battery pack 21 and the inner surface of the battery case 24 and flows back to the horizontal air leading path 82 as shown in Figs. 3 and 4, thereby cooling or warming the battery packs 21.

The battery pack 21 is configured so that the respective element batteries 20 are brought into close contact with one another with no gap, and thus no air flowing path is formed between the element batteries 20. Accordingly, no wind noise occurs when air passes between the element batteries 20, and thus silence of the battery device 12 is enhanced.
Furthermore, the gap between the respective element batteries 20 is eliminated, and thus the battery device 12 can be miniaturized.

As described above, according to this embodiment, the battery case 24 in which the battery packs 21 are mounted is configured in a hermetically sealed structure, and thus invasion of grit or dust into the inside of the battery case 24 can be prevented. Furthermore, operation noise of the air blowing fan 31 disposed in the battery case 24 hardly leaks to the outside and thus noise can be reduced.
In addition, the plural element batteries 20 are brought into close contact with one another to construct the battery pack 21, and a gap which possibly serves as an air flowing path is not provided between the respective element batteries 20. Therefore, occurrence of wind noise which occurs due to air flow between the element batteries 20 is eliminated and the battery device 12 having high silence performance is implemented. Furthermore the gap between the respective element batteries 20 is eliminated, and thus the battery device 12 can be miniaturized.

Furthermore, inert gas or dried air is hermetically filled in the battery case 24 under the state that the battery case is hermetically sealed, and thus occurrence of condensed water can be prevented when the inside of the container is cooled by the heat exchanger 30.

Still furthermore, the heat exchanger 30 is internally mounted in the battery case 24, and thus the battery device 12 can be sufficiently cooled even when the outside air temperature is high in the summer season or the like.

Still furthermore, the stress breaker 49 for absorbing the internal pressure variation caused by the internal temperature variation is provided in the battery case 24. Therefore, even when the internal temperature of the battery case 24 is varied in connection with cooling or warming of the battery pack 2, the stress breaker 49 absorbs the pressure variation, so that the internal pressure can be kept constant and extra load can be prevented from being imposed on each unit. Furthermore, in a case where the internal pressure increases excessively due to occurrence of gas from the element batteries 20, the exhaust safetyvalve 48 is automatically opened to evacuate the internal gas to the outside when the internal pressure reaches predetermined pressure, so that the battery case 24 can be prevented from being burst.

Furthermore, the refrigerating apparatus 13 is configured so that the function of the heat exchanger 30 of the battery device 12 is switchable between the evaporator and the condenser, and thus not only cooling but also warming can be performed on the battery packs 21. Accordingly, even when the outside air temperature is low in the winter season or the like, the temperature of the battery packs 21 of the battery device 12 can be kept to be equal to or more than the lowest temperature which is required to keep the quality.

As described above, the refrigerating apparatus 13 is operated with power from the battery device 12. Therefore, even when the control system at the vehicle side of the electrical vehicle 1 is stopped and thus kept under non-operation state, the refrigerating apparatus 13 operates independently, and the battery device 12 is cooled or warmed, so that the temperature of the battery packs 21 can be kept within a temperature range required to keep the quality at all times.

### <Second Embodiment>

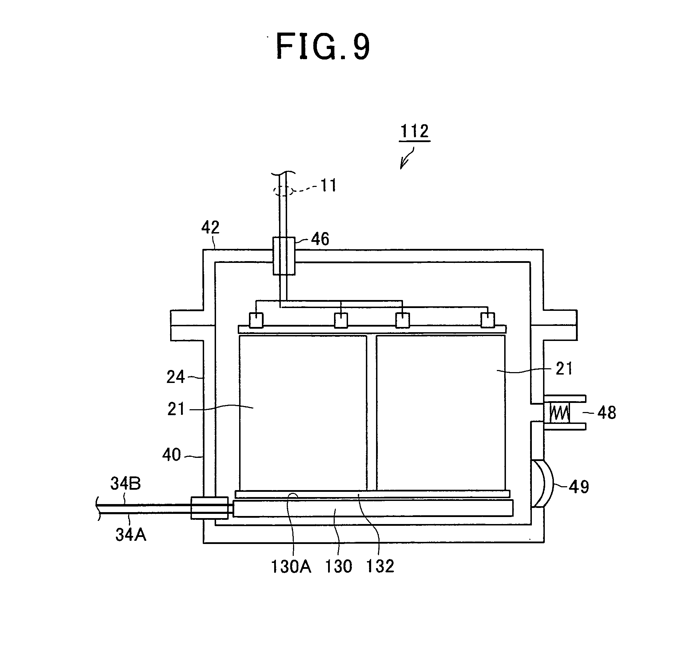

Fig. 9 is a schematic diagram showing the construction of the battery device 112 according to this embodiment.

In Fig. 9, the parts described with reference to the first embodiment are represented by the same reference numerals, and the description thereof is omitted.

In the battery device 112 of this embodiment, a plate type heat exchanger 130 is provided in the battery case 24. An insulating plate 132 is provided on the whole surface of the top surface 130A of the heat exchanger 130, and the battery packs 21 are mounted on the insulating plate 132. The quality of material and thickness of the insulating plate 122 are designed so that excellent thermal conductivity can be implemented between the heat exchanger 130 and the battery packs 21 with keeping the insulation between the battery packs 21 and the heat exchanger 130.

Refrigerant from the refrigerating apparatus 13 juxtaposed with the battery device 112 or the existing air conditioner (car air conditioner) mounted in the electrical vehicle 1 is introduced to the heat exchanger 130, thereby cooling or warming the battery packs 21 by thermal conductivity. As in the case of the first embodiment, the battery case 24 is hermetically sealed while hermetically filled with inert gas or dried air, and even when the heat exchanger 130 is cooled, no condensed water occurs in the battery case 24.

According to this embodiment, the battery packs 21 are cooled or warmed by the thermal conductivity, and thus it is unnecessary to provide the air blowing fan 31 in the battery case 24 to circulate cold air or warm air and also form an air leading path for this circulation. Accordingly, the battery case 24 can be miniaturized and silenced. Furthermore, the air blowing fan 31 is not required and thus a trouble caused by a movable part is eliminated, which contributes to enhancement of the quality.
Furthermore, the battery case 24 is hermetically sealed, and thus invasion of grit or dust can be prevented.

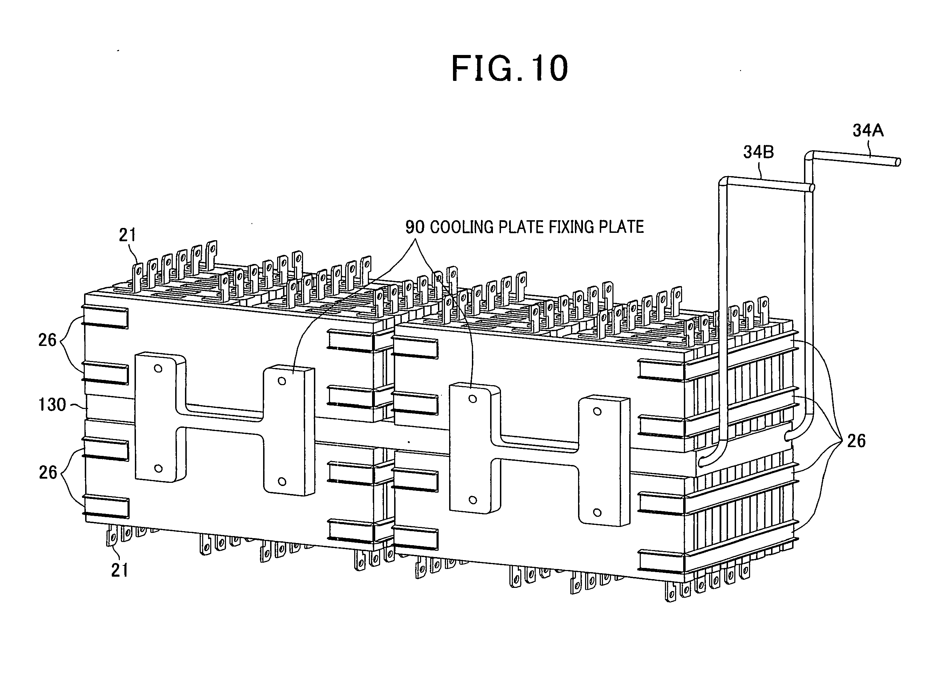

In this embodiment, the plate type heat exchanger 130 is disposed at the lower side of the one-stage type battery packs 21, however, the present invention is not limited to this style. As shown in Fig. 10, when two-stage type battery packs 21 are used, the structure that the heat exchanger 130 is sandwiched by the battery packs 21 from the upper and lower sides may be adopted. At this time, the plate type heat exchanger 130 is sandwiched between the battery packs 21 by cooling plate fixing plates 90.

### <Third Embodiment>

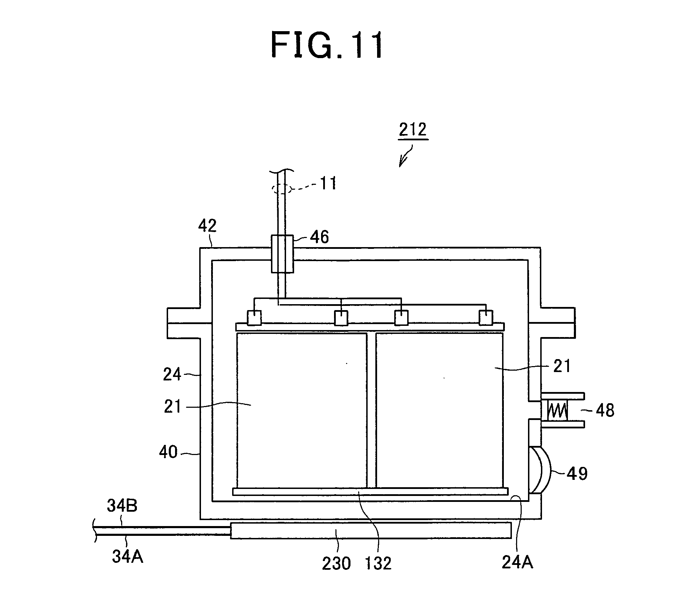

Fig. 11 is a schematic diagram showing the construction of a battery device 212 according to this embodiment.
In Fig. 11, the parts described with reference to the first or second embodiment are represented by the same reference numerals, and the description thereof is omitted.

The battery device 212 of this embodiment is configured so that the heat exchanger is not disposed in the battery case 24, but it is disposed at the outside of the battery case 24. Specifically, the battery packs 21 are arranged in the battery case 24 to be brought into contact with any of the inner surface, the bottom surface 24A and the lid plate 42 (the bottom surface 24A in the figure) through the insulating plate 132, and the plate type heat exchanger 230 is disposed into close contact with the surface concerned from the outside of the surface concerned.

Refrigerant from the refrigerating apparatus 13 juxtaposed with the battery device 112 or an existing air conditioner (car air conditioner) equipped to the electrical vehicle 1 is introduced into the heat exchanger 230, whereby the battery packs 21 are cooled or warmed by thermal conductivity through a partition wall of the battery case 24. As in the case of the first embodiment, the battery case 24 is hermetically sealed under the state that inert gas or dried air is filled in the battery case 24, so that no condensed water occurs in the battery case 24 even when cooling is performed by the heat exchanger 230.

According to this embodiment, as in the case of the second embodiment, the battery packs 21 are cooled or warmed by thermal conductivity. Therefore, it is unnecessary that the air blowing fan 31 is provided in the battery case 24 to circulate cold air or warm air and an air leading path for this circulation is formed, so that the battery case 24 can be miniaturized and silenced.
Furthermore, the battery case 24 is hermetically sealed, and invasion of grit or dust can be prevented.

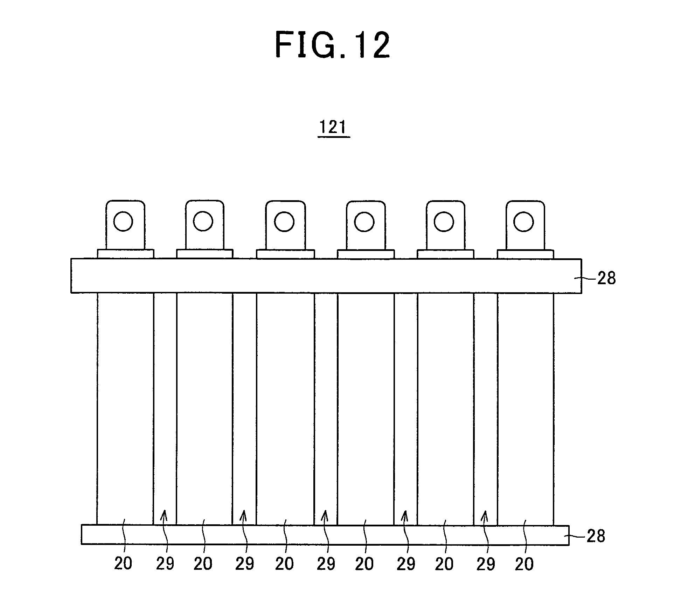

The first to third embodiments show embodiments of the present invention, and any modification and application can be made without departing from the subject matter of the present invention.
For example, in the battery devices 12, 112, 212 described above, the plural element batteries 20 are brought into contact with one another through the insulating sheets 27 to construct the battery pack 21. However, the present invention is not limited to this style. That is, for example, as shown in Fig. 12, plural rectangular element batteries 20 may be arranged side by side with a binding support member 28 so as to be spaced from one another through gaps 29, thereby constructing the battery pack 21, and an air flowing path through which cold air or warm air based on the heat exchanger 30 flows may be formed by each gap 29 between the respective element batteries 20. According to this construction, cold air or warm air can also pervade the gaps between the respective element batteries 20.

In each of the embodiments described above, the dried air is filled in the battery case 24. However, it maybe considered that air containing moisture is filled in the battery case 24 with time lapse unintentionally. In this case, when the battery packs 21 are installed in the battery case 24, it is effective to mount dehumidifier or absorbent (silica gel) in the battery case 24.

Furthermore, for example, in each of the embodiments described above, the battery device mounted in the electrical vehicle 1 has been described. However, the present invention is not limited to this style, and the battery device of this invention may be used as a power source for any vehicle such as a hybrid vehicle, a two-wheeled vehicle, a train, an airplane or the like insofar as the vehicle requires a high voltage. Furthermore, the battery device of this invention may be used as a power source for any equipment requiring a high voltage without limiting to a vehicle.

### <Fourth Embodiment>

In addition to the technique described in "Background Art", a technique that a battery device is mounted in a refrigeration cycle of an air conditioner provided to a vehicle in advance to introduce refrigerant of the refrigeration cycle into the battery device to cool the battery device (for example, JP-A-5-344606) or a technique that cooling refrigerant is cooled by using cooled air of an air conditioner of a vehicle and the cooling refrigerant is introduced into the battery device to cool the battery device (for example, JP-A-2002-191104) is known as the technique of cooling the battery device mounted in the vehicle.

However, in the construction that the battery device is cooled by using the existing air conditioner of the vehicle, the air conditioner of the vehicle is operated when the battery device is cooled, and thus it is necessary to start the control system at the vehicle side.
Furthermore, in a relatively high temperature season such as summer or the like, it is necessary to air-condition the vehicle interior in addition to cooling of the battery device, and thus scramble of the cooling capacity of the air conditioner of the vehicle occurs.
Furthermore, the air conditioner of the vehicle has cooling power appropriate to cool the vehicle interior, and the cooling power is excessively large than cooling capacity required to cool the battery device. Therefore, when the air conditioner is controlled for the purpose of only cooling of the battery device without cooling of the vehicle interior, the control is complicated and the air-conditioning efficiency is deteriorated.

In view of the foregoing situation, in this embodiment, the battery unit that can cool the battery device without using the air conditioner of the vehicle will be described hereunder.

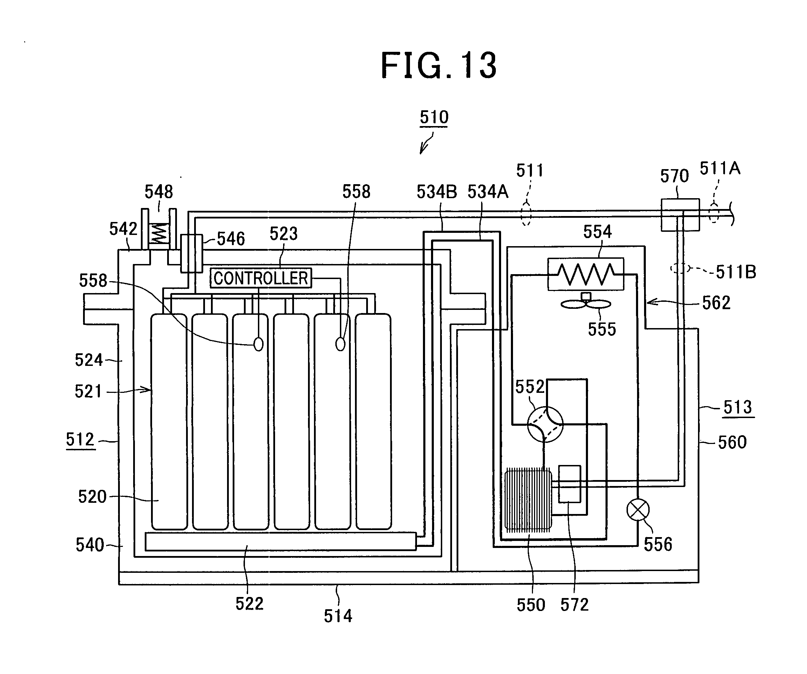

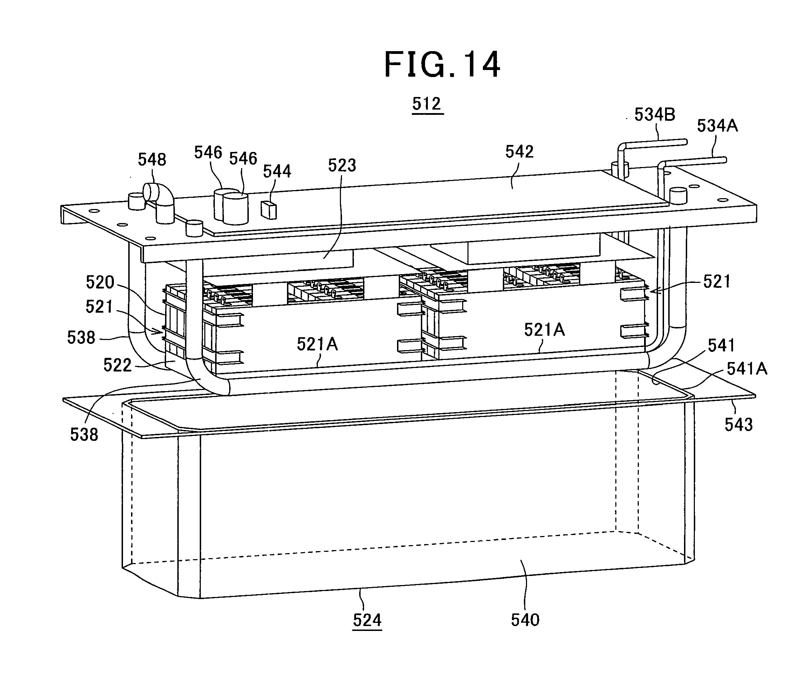

Fig. 13 is a schematic diagram showing the construction of a battery unit 510 according to an embodiment. Fig. 14 is an exploded perspective view of the battery device 512 according to an embodiment. The mount style of the battery unit 510 in the vehicle 1 is identical to that shown in Fig. 1, and the outlook construction of the battery unit 510 is identical to that shown in Fig. 2. Therefore, the illustration and description thereof are omitted.

As shown in Fig. 13, the battery unit 510 has a battery device 512 for accumulating power to be demanded and supplied to the vehicle driving motor 4 (see Fig. 1), and a cooling and warming device 513 for cooling or warming the battery device 512. These devices are mounted and fixed onto a base plate 514 to be assembled with each other.
As shown in Fig. 14, the battery device 512 has a battery pack 521 containing a set of plural element batteries (cells) 520, a cooling and warming plate 522 for cooling the battery pack 521, a controller 523 for controlling the battery device 512 and the cooling andwarming device 513, and a hermetical- sealed container 524 in which these devices are mounted.

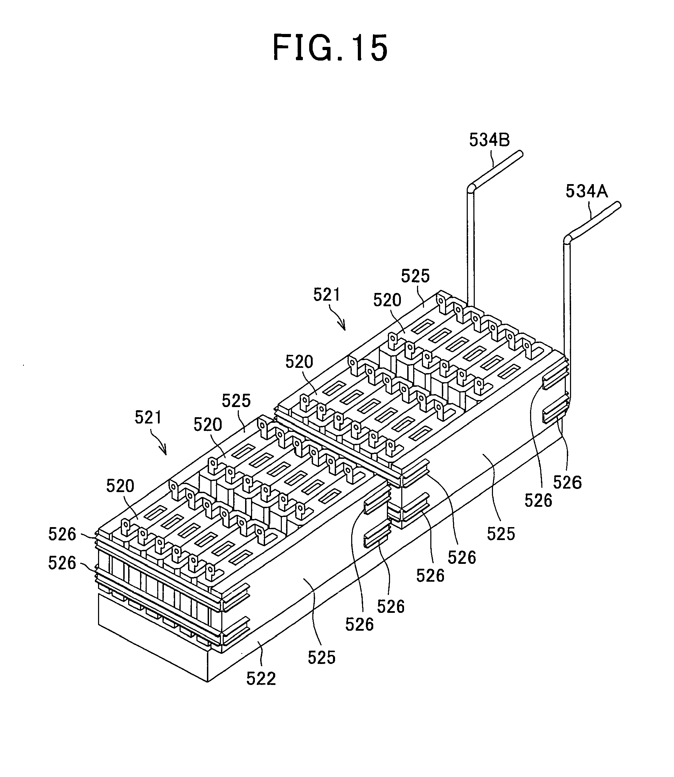

A nonaqueous electrolytic secondary battery containing an electric generating element in which a positive electrode and a negative electrode are wound through a separator is mounted in a rectangular flat-plate type case of aluminum or aluminum alloy, thereby forming the element battery 20. Lithium ion secondary battery or the like is suitably used as the nonaqueous electrolytic secondary battery. As shown in Fig. 15, plural element batteries 520 are juxtaposed with one another, sandwiched by a pair of pinching sheets 525 and bound by a binding clasp 526, thereby constructing the battery pack 521. A plurality of battery packs 521 as described above are arranged side by side. In Fig. 13, only one battery pack 521 is shown to avoid cumbersome illustration of Fig. 13.

The cooling and warming plate 522 is constructed as a long plate of aluminum or aluminum alloy, ant it serves as a heat exchanger (second heat exchanger) which heat-exchanges with the battery packs 521 to cool or warm the battery packs 521. A liquid pipe 534A and a gas pipe 534B as refrigerant pipes are drawn out from one end of the cooling and warming plate 522.

As shown in Fig. 14, the hermetically-sealed container 524 is configured so that a box-shaped container body 540 opened at the top surface thereof is hermetically closed by a lid plate 542, and a folding piece 543 is provided over the whole periphery of the opening edge portion 541A of the container body 540. When it is hermetically closed by the lid plate 542, the lid plate 542 comes into close contact with the folding piece 543 through a seal member (not shown), thereby enhancing the hermetically sealing performance.
Furthermore, the cooling and warming plate 522 on which the battery packs 521 are mounted is secured to the valley portions of two frame pipes 538 which are bent to be substantially U-shaped so that the cooling and warming plate 522 is pinched by the frame pipes 538. Both the ends of the two frame pipes 538 are made to penetrate to the back side of the lid plate 542 and fixed, so that the cooling and warming plate 522 and the battery packs 521 are suspended on the lid plate 542. Accordingly, the load of the lid plate 542 increases, and thus the hermetically-sealing performance between the lid plate 542 and the container body 540 is enhanced.

The box-shaped controller 523 is disposed in the gap between the lid plate 542 and the battery packs 521 at the back surface side of the lid plate 542. The controller 523 is driven with power supply from the battery packs 521 or power supplied from a separately provided battery, and it is configured to be operable independently of the control system at the vehicle side. The controller 423 controls the charging of the battery device 512 and the operation of the cooling and warming device 513. The controller 523 may be provided separately from the controller for controlling the charging of the battery device 512.

The liquid pipe 534A and the gas pipe 534B of the cooling and warming plate 522 penetrate from the back surface side of the lid plate 542 to be drawn out to the outside, and the lid plate 542 is provided with a plug 544 for a vehicle communication line, a pair of high voltage line connecting plugs 546 and an exhaust safety valve 548.
The vehicle communication line plug 544 is a connection plug for connecting a communication line through which a vehicle-side control system for performing control associated with running of the vehicle, etc. and the controller 523 are connected to each other, and the pair of high voltage line connection plugs 546 are plugs for connecting each of two electric feeder lines provided to the high electric cable 511 to the battery packs 521.

When the internal pressure of the hermetically-sealed container 524 reaches predetermined pressure, the tap of the exhaust safety valve 548 is pushed out by the internal pressure concerned to open the exhaust safety valve 548, so that gas in the hermetically-sealed container 524 is allowed to be discharged to the outside.
More specifically, with respect to a secondary battery, for example, a lithium ion secondary battery, particularly when it is excessively charged or short-circuiting occurs inside the battery under a charging state, heat is generated or gas occurs due to abnormal reaction, so that the inner pressure may rapidly increase. In such a case, in order to prevent increase of the inner pressure of the hermetically-sealed container 524 and thus burst of the hermetically-sealed container 524 in advance, the exhaust safety valve 548 is opened and the gas inside the hermetically-sealed container 524 is discharged to the outside.

The cooling and warming device 513 shown in Fig. 13 is provided exclusively for the battery device 512, and it has a case body 560, a compressor 550, a four-way valve 552, a cooling and warming device side heat exchanger (first heat exchanger) 554 for heat-exchanging with the outside air, an air blowing fan 555 for blowing the outside air to the cooling and warming device side heat exchanger 554, and an expansion valve 556 serving as a pressure-reducing device. Furthermore, the cooling and warming plate 522 is connected to construct a refrigeration circuit (refrigeration cycle).
A compact compressor having capacity appropriate to cool the battery device 512 is used as the compressor 550, and the cooling and warming device 513 is configured in a compact size.

The heat exchange of the cooling and warming device side heat exchanger 554 with the outside air will be described in detail. As shown in Fig. 1, the electrical vehicle 1 is provided with a duct 65 for connecting the vehicle interior 5 and the outside of the vehicle. The duct 65 is disposed so as to pass from the rear side of the rear seat 7 of the vehicle interior 5 just below or aside the trunk 9 and reach the outside of the vehicle to construct a path for exhausting air in the vehicle interior 5 to the outside. The cooling and warming device side heat exchanger 554 and the air blowing fan 555 are disposed at some positions of the duct 65.

More specifically, the cooling and warming device 513 of the battery unit 510 has a protruding portion 562 (corresponding to reference numeral 62 of Figs. 1 and 2) which protrudes to the duct 65 so as to invade into the duct 65 from the lower side and be disposed in the duct 65 when the battery unit 510 is mounted in the vehicle. As shown in Fig. 13, the cooling and warming device side heat exchanger 554 and the air blowing fan 555 are internally provided in the protruding portion 562. Therefore, the battery unit 510 is mounted in the vehicle, whereby the cooing and warming device side heat exchanger 554 and the air blowing fan 555 are disposed in the duct 65. The protruding portion 562 may be configured to invade from the lateral side into the duct 65 and be disposed in the duct 65.

When the cooling and warming device 513 is operated, heat-exchange is performed between the air in the duct 65 and the cooling and warming device side heat exchanger 554 in connection with the rotational operation of the air blowing fan 555. At this time, the air blowing fan 555 is disposed in the duct 65 so as to form an air stream flowing from the vehicle interior 5 side to the outside of the vehicle. The air in the vehicle interior 5 heat-exchanges with the cooling and warming device side heat exchanger 554 and then discharged to the outside of the vehicle.

Accordingly, air which is heat-exchanged with the cooling and warming side device heat exchanger 554 to be heated or cooled is prevented from being blown into the vehicle interior 5.
Furthermore, when the vehicle interior 5 is air-conditioned by the existing air conditioner (car air conditioner) in the electrical vehicle 1, the air-conditioned air is led to the duct 65, and heat-exchanges with the cooling and warming device side heat exchanger 554, and thus there is the following effect.
That is, when the outside air temperature is high in the summer season or the like, the temperature of the battery device 512 also increases to be higher than the normal temperature, and thus it is necessary to increase the cooling capacity of the cooling and warming device 513. However, in this case, the vehicle interior 5 is cooled by the existing air conditioner, and thus cold air based on cooling and the cooling and warming device side heat exchanger 554 are heat-exchanged with each other and heat is sucked up from the cooled air, so that the energy- saving operation can be performed.

The control of the operation of the cooling and warming device 513 is performed by the controller 523 of the battery device 512, and the controller 523 switches the four-way valve 552 in accordance with the cooling and warming of the battery device 512, whereby the cooling and warming plate 522 is made to function as the evaporator or the condenser. More specifically, a temperature sensor 558 is provided to the battery pack 521, and the controller 523 controls the operation of the cooling and warming device 513 on the basis of a detection temperature based on the temperature sensor 558. This control of the operation will be described in detail later.

Here, in this embodiment, the driving power of the cooling and warming device 513 is not obtained from the existing battery mounted at the vehicle side, but obtained from the battery device 512.
More specifically, as shown in Fig. 13, the high electric cable 511 drawn out from the battery device 512 is branched to a high electric cable 511A for driving a vehicle and a high electrical cable 511B for driving the cooling and warming device 513 at some position of the path thereof by a branch unit 570, and the high electric cable 511B is connected to the cooling and warming device 513. Furthermore, the cooling and warming device 513 has an inverter 572 for converting high-voltage DC power supplied from the battery device 512 to AC power of predetermined power through the high electric cable 511B, and the compressor 50 is driven with the AC power of the inverter 572.

As described above, the cooling and warming device 513 is operated with power from the battery device 512, whereby the operation of the cooling and warming device 513 can be controlled independently of the power supply system at the vehicle side. Accordingly, even when the power supply at the vehicle side is turned off, the cooling and warming device 513 can be operated to cool or warm the battery device 12.

Next, the cooling or warming operation of the cooling and warming device 513 of the battery unit 510 will be described as the operation of the battery unit 510 of this embodiment.

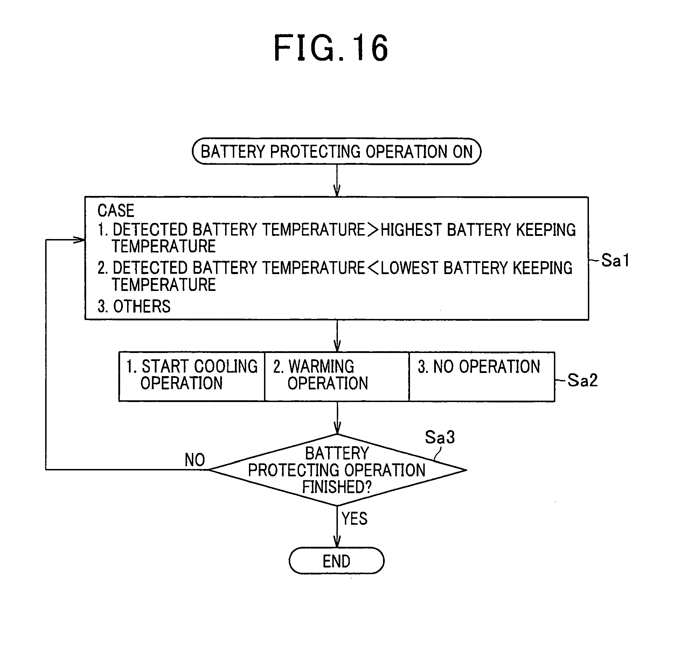

Fig. 16 is a flowchart showing battery protecting operation processing.
Under the state that the electrical vehicle 1 is under non-operation state and no power is supplied from the battery device 512 to the vehicle driving motor 4 (Fig. 1), the battery protecting operation processing monitors the temperature of each element battery 520 of the battery device 512 and operates the cooling and warming device 513 so that the temperature of each element battery 520 is kept within a temperature range required to keep the quality, thereby preventing deterioration of the quality of the battery device 512.

Specifically, for example when the system at the vehicle side is set to key-off, the controller 523 of the battery unit 510 determines that the electrical vehicle 1 is set to a non-operation state, and starts the battery protecting operation processing. In the battery protecting operation processing, as shown in Fig. 16, the controller 523 intermittently detects the temperature of the element battery 520 by a temperature sensor 558, compares the detected battery temperature with a temperature range required to keep the quality (step Sa1), and operates the cooling and warming device 513 in accordance with the comparison result (step Sa2).

That is, when the detected battery temperature is larger than the maximum battery keeping temperature defining the maximum temperature of the temperature range required to keep the quality (CASE 1), the controller 523 starts cooling operation for operating the cooling and warming device 513 so that the cooing and warming plate 522 functions as an evaporator. Conversely, when the detected battery temperature is lower than the lowest battery keeping temperature defining the lowest temperature of the temperature range required to keep the quality (CASE 2), the controller 523 starts warming operation for operating the cooling and warming device 513 so that the cooing and warming plate 522 functions as a condenser. Furthermore, when the detected battery temperature is within the temperature range (CASE 3), it is unnecessary to cool or warm the battery device 512, and thus the cooling and warming device 513 is set to a stop state.
Thereafter, on the basis of whether the control system is started through key-on at the vehicle side of the electrical vehicle 1 and thus communication is started or not, the controller 523 determines whether the battery protecting operation is stopped or not (step Sa3), and repetitively executes the steps Sa1 and Sa2 until the battery protecting operation is stopped, whereby the temperature of the element battery 520 is kept within the temperature range required to keep the quality. The residual amount of the battery device 512 may be monitored so that the battery protecting operation is also stopped when the battery device falls into over discharge.

By performing the battery protecting operation as described above, even when the outside air temperature decreases or increases, for example during nighttime for which the electrical vehicle 1 is set to the non-operation state, the temperature of the element battery 520 is kept within the temperature range required to keep the quality, so that the deterioration of the element batteries 520 can be prevented.

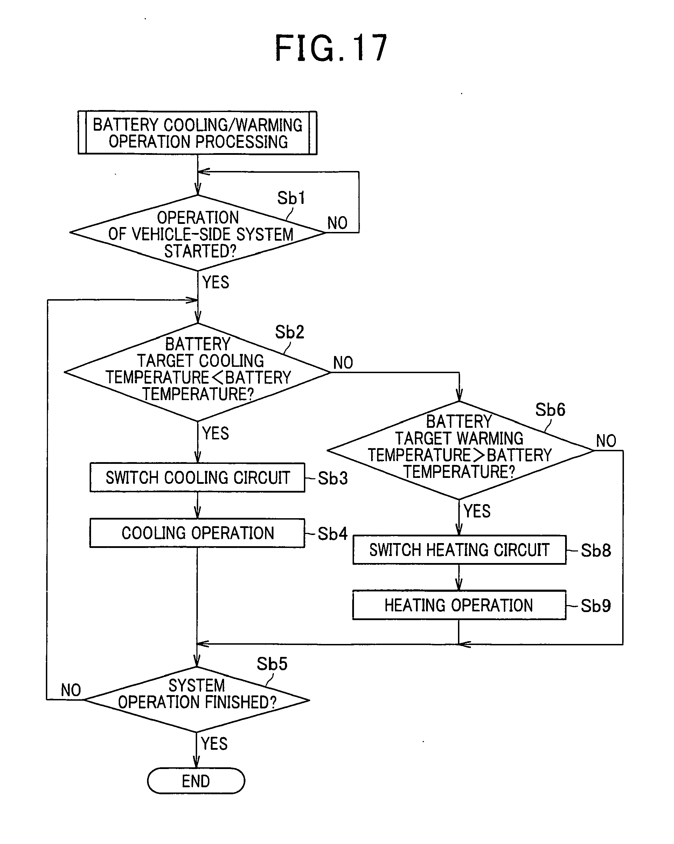

The controller 523 executes the battery cooling/warming processing shown in Fig. 17 while the control system at the vehicle side of the electrical vehicle 1 is started, that is, while power is supplied form the battery device 512 to the vehicle driving motor 4 of the electrical vehicle 1. The battery cooling/warming processing is the processing of keeping the element batteries 50 to a proper temperature which is appropriate to the power supply operation of the battery device 512.
Specifically, as shown in Fig. 17, when the control system at the vehicle side is started (step Sb1: YES), the controller 523 determines whether the detected battery temperature of the temperature sensor 558 exceeds a battery target cooling temperature defining the temperature at which cooling is required (step Sb2).

When the detected battery temperature exceeds the battery target cooling temperature (step Sb2: YES), the controller 523 switches the refrigeration cycle of the cooling andwarming device 513 to a cooling circuit in which the cooling and warming plate 522 functions as an evaporator (step Sb3), and starts cooling operation (step Sb4). Thereafter, the control system at the vehicle side of the electrical vehicle 1 is stopped, and the battery cooling/warming processing is continued until the electrical vehicle 1 is set to the non-operation state (step Sb5: NO), and thus the processing procedure is returned to the step Sb2.
Accordingly, even when the element batteries 520 generate heat due to power supply to the vehicle driving motor 4, the temperature of the element batteries 520 can be properly kept by the cooling of the cooling and warming device 513.

Furthermore, when the detected battery temperature does not exceed the battery target cooling temperature (step Sb2: NO), the controller 523 determines whether the detected battery temperature decreases to be less than the battery target warming temperature defining the temperature at which warming is required (step Sb6).
When the detected battery temperature exceeds the battery target warming temperature (step Sb6: NO), it is unnecessary to warm the battery device 512, and thus the controller 523 returns the processing procedure to the step Sb5 to continue the battery cooling/warming processing until the control system at the vehicle side is stopped.

On the other hand, when the detected battery temperature is less than the battery target warming temperature (step Sb6: YES), the controller 523 switches the refrigeration cycle of the cooling and warming device 513 to a heating circuit in which the cooling and warming plate 522 functions as a condenser (step Sb7), and starts heating operation (step Sb8). Thereafter, the battery cooling/warming processing is continued until the control system at the vehicle side of the electrical vehicle 1 is stopped (step Sb5: NO), and thus the processing procedure is returned to the step Sb2. Accordingly, even in a case where the temperature is excessively low when the element batteries 520 supply power, the temperature of the element batteries 520 can be increased to a proper temperature by warming based on heating of the cooling and warming device 513.

As described above, according to this embodiment, the battery device 512 for supplying power to the vehicle driving motor 4, and the cooling and warming device 513 having the cooling and warming plate 522 as the heat exchanger for cooling or warming the battery device 512 are configured to be integrated with each other, thereby constructing the battery unit 510. Therefore, the cooling or warming of the battery device 512 can be independently performed without using the air conditioner of the vehicle.
Furthermore, even when the vehicle interior 5 is required to be cooled, the battery device 512 can be cooled independently of the air conditioner of the vehicle, and thus it is unnecessary to squabble about the cooling capacity of the air conditioner, and thus stable operation can be performed.
Still furthermore, the cooling and warming device 513 merely has an air-conditioning capacity which is needed and sufficient to cool/warm the battery device 512. Therefore, it can be miniaturized and also the operation can be performed with high efficiency.

Furthermore, according to this embodiment, the cooling andwarming device 513 has the four-wayvalve 552 , and is configured so as to enable both the cooling operation and the heating operation, so that the battery device 512 can be not only cooled, but also warmed.

In addition, according to this embodiment, the cooling and warming device 513 is operated with power from the battery device 512, and thus the cooing and warming device 513 can be operated independently of the power supply system at the vehicle side. Accordingly, even when the control system at the vehicle side of the electrical vehicle 1 is stopped and set to the non-operation state, the battery unit 510 drives the cooling and warming device 513 by itself to cool or warm the battery device 512, and the battery protecting operation and the battery preliminary heating operation can be performed.

particularly, in this embodiment, the temperature of the element battery 520 of the battery device 512 is suppressed to the temperature range required to keep the quality by the battery protecting operation, so that the deterioration of the battery device 512 can be prevented and the lifetime can be lengthened.

Furthermore, according to this embodiment, the cooling and warming device side heat exchanger 554 which heat-exchanges with the outside air is provided on the path of the duct 65 through which air in the vehicle interior 5 of the vehicle is exhausted to the outside of the vehicle interior. Therefore, when the battery device 512 is cooled, heat is laved from cooled air in the vehicle interior 5, and energy-saving operation can be performed.

The fourth embodiment described above is an embodiment of the present invention, and thus any modification and application may be made without departing from the subject matter of the present invention.

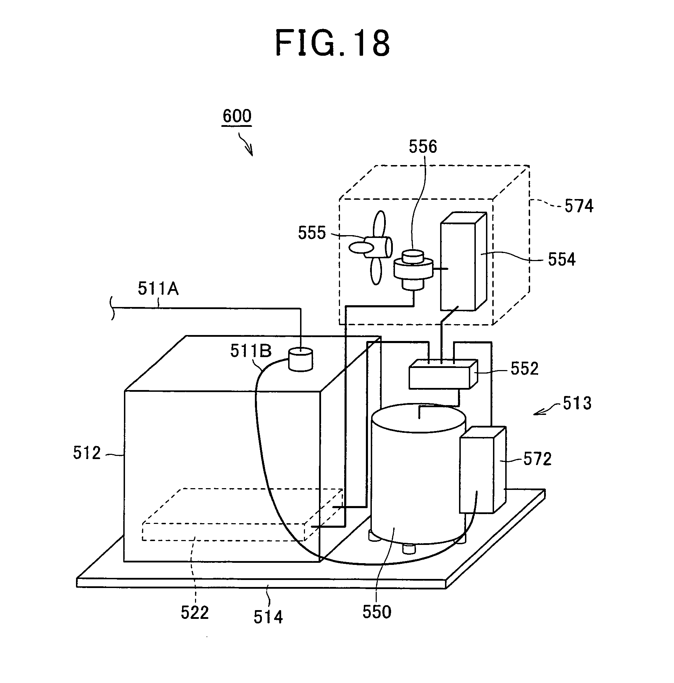

For example, the cooling and warming device 53 is not necessarily required to be provided with the case body 530 as in the case of a battery unit 600 shown in Fig. 18. Furthermore, as shown in Fig. 18, the cooling and warming device side heat exchanger 554 and the air blowing fan 555 are accommodated in a module case 574 to be modularized, and also the refrigerant pipe is constructed by using a flexible tube, whereby the cooling and warming device side heat exchanger 554 and the air blowing fan 555 can be handled integrally with each other. Furthermore, by merely drawing out the module case 574 and disposing it in the duct 65, the cooling and warming device side heat exchanger 554 and the air blowing fan 555 can be simply arranged in the duct 65.

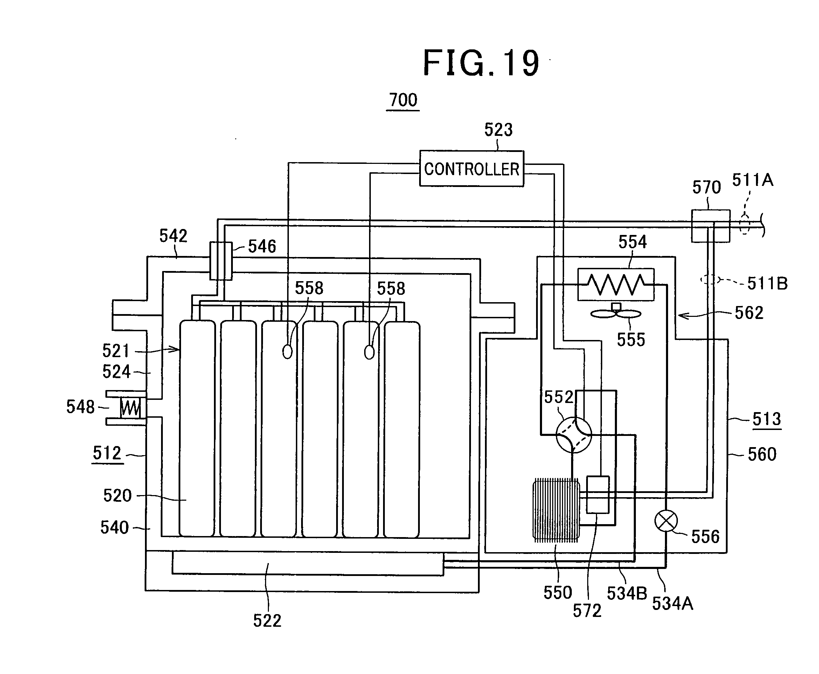

Furthermore, for example, the present invention is not limited to the structure that the cooling and warming plate 522 equipped to the cooling and warming device 513 is disposed in the hermetically-sealed container 524 of the battery device 512, but may be applied to the structure that the cooling and warming plate 522 is arranged to be brought into close contact with the bottom portion of the hermetically-sealed container 524 from the outside as in the case of a battery unit 700 shown in Fig. 19, and the inside element batteries 520 through the hermetically-sealed container 524 are cooled or warmed.
Furthermore, as shown in Fig. 19, the present invention is not limited to the structure that the controller 523 is provided in the hermetically-sealed container 524 of the battery device 512, but it may be provided at the outside. The above controller 523 may be provided separately from the controller which is provided to the battery device 512 to control the charging of the battery packs 521.

The battery unit mounted in the electrical vehicle 1 has been described. However, the present invention is not limited to the electrical vehicle, and the battery device of this invention may be used for any vehicle such as a hybrid vehicle, a two-wheeled vehicle, a train, an airplane or the like insofar as the vehicle requires a high voltage. Furthermore, this invention is not limited to the vehicle, but the battery unit of this invention may be used for any equipment requiring a high voltage.

## Claims

1. A battery device having a battery which is mounted in a battery case to accumulate power to be demanded and supplied to a motor for driving a vehicle, **characterized in that** the battery case is designed in a hermetically-sealed structure, a heat exchanger for cooling ambient atmosphere in the battery case and an air blower for blowing cold air of the heat exchanger to the battery are provided in the battery case, and inert gas or dried air is hermetically filled in the battery case under a state that the battery case is hermetically sealed.

2. The battery device according to claim 1, wherein the battery has plural rectangular element batteries and the respective element batteries are configured in close contact with one another so that an insulating sheet is interposed between the respective element batteries in the above invention.

3. The battery device according to claim 1, wherein the battery has plural rectangular element batteries and the respective element batteries are arranged so that a gap for passing the cold air is provided.

4. A battery device having a battery which is mounted in a battery case to accumulate power to be demanded and supplied to a motor for driving a vehicle, **characterized in that** the battery case is designed in a hermetically-sealed structure, a plate type heat exchanger is provided in the battery case to be in close contact with the battery, and inert gas or dried air is hermetically filled in the battery case under a state that the battery case is hermetically sealed.

5. A battery device having a battery which is mounted in a battery case to accumulate power to be demanded and supplied to a motor for driving a vehicle, **characterized in that** the battery case is designed in a hermetically-sealed structure, the battery is disposed in close contact with the internal side of any surface of a side surface, a bottom surface and a top surface of the battery case, a plate type heat exchanger is disposed so as to be brought into contact with the battery-contacted surface from the outside, and inert gas or dried air is hermetically filled in the battery case under a state that the battery case is hermetically sealed.

6. The battery device according to any one of claims 1, 4 and 6, wherein a stress breaker for absorbing an internal pressure variation caused by internal temperature variation is provided in the battery case in the above invention.

7. The battery device according to any one of claims 1, 4 and 5, wherein the battery in the battery case can be warmed by the heat exchanger in the above invention.

8. A battery unit having a battery device for supplying power to a motor for driving a vehicle, and a cooling and warming device comprising a compressor to be driven with electric power supplied from the battery device, a first heat exchanger that heat-exchanges with the outside air, a pressure-reducing device and a second heat exchanger for cooling or warming the battery device, the battery device and the cooling and warming device being integrated with each other.

9. The battery unit according to claim 8, wherein the first heat exchanger is provided to be mountable in a passage for exhausting air in a vehicle interior of a vehicle to the outside of the vehicle interior in the above invention.

10. The battery unit according to claim 8 or 9, further comprising control means for driving the cooling and warming device with power supplied from the battery device when the temperature of the battery device is lower than the lowest temperature required to keep the quality of the battery device or exceeds the maximum temperature.
